# EUROPÄISCHE PATENTSCHRIFT

(11) **EP 2 266 825 B1**
(45) Veröffentlichungstag und Bekanntmachung des Hinweises auf die Patenterteilung: **29.11.2017**
(21) Anmeldenummer: 10006222.3
(22) Anmeldetag: 16.06.2010
(51) Int. Cl.: B60J 5/06, B60P 7/08

(54) **Transportfahrzeug mit Zollverschlussvorrichtung**
Transport vehicle with bonding device
Véhicule de transport doté d'un dispositif de fermeture de douane

(30) Priorität: 26.06.2009 DE 102009030906
(43) Veröffentlichungstag der Anmeldung: 29.12.2010
(73) Patentinhaber: Fahrzeugwerk Bernard Krone GmbH, 48480 Spelle (DE)
(72) Erfinder: Singer, Mario, 49832 Freren (DE)
(74) Vertreter: Weeg, Thomas

(56) Entgegenhaltungen:
- EP-A1- 0 466 643
- DE-U1- 20 110 543
- GB-A- 1 522 301

## Beschreibung

Die vorliegende Erfindung bezieht sich auf ein Transportfahrzeug mit Zollverschlussvorrichtung für Schiebeplanen in einer Ausgestaltung gemäß dem Oberbegriff des Patentanspruches 1.

Aus dem Stand der Technik ist es bekannt, Fahrzeuge mit Bordwänden mit Zollverschlussvorrichtung zu versehen. Eine Zollverschlussvorrichtung ist eine Ausstattung für ein Transportfahrzeug, die von den Zollbehörden als ausreichend manipulationssicher anerkannt ist, um den Transportraum zu versiegeln und grenzüberschreitende Transporte ohne eine körperliche Überprüfung der transportierte Ware durch Inaugenscheinnahme an der Grenze allein auf Basis der Versiegelung des Frachtraums und der Frachtpapiere abwickeln zu können.

Die Transportfahrzeuge mit einer festen Bordwand bieten eine größtmögliche Sicherheit, da feste Bordwände nur mit erheblichem Aufwand von Unbefugten aufgebrochen werden können, um Waren aus dem Transportfahrzeug zu entnehmen. Sie weisen allerdings den Nachteil auf, dass die Bordwände ein erhebliches Mehrgewicht verursachen. Auch sind Be- und Entladevorgänge bei Bordwandfahrzeugen sehr zeitaufwändig. Auch die Herstellkosten der Bordwandfahrzeuge sind höher.

In jüngerer Zeit sind auch Transportfahrzeuge mit seitlichen Schiebeplanen bekannt geworden, die eine Zollverschlussvorrichtung aufweisen. Um die Schiebeplane gegen ein Durchgreifen an den losen Seiten zollsicher zu schützen, muss ein ausreichend sicherer Durchgriffschutz an die Schiebeplanenfahrzeuge angebaut werden. Da dieser Durchgriffschutz die volle Länge des Transportfahrzeuges abzusichern hat, erstreckt sich dieser über die gesamte Länge des Transportfahrzeuges. Dabei werden insbesondere Befestigungslöcher für Ladungssicherungssysteme abgedeckt, wodurch die Sicherung der mit dem Transportfahrzeug zu befördernden Ladung erheblich erschwert wird. Da die Zollverschlusssysteme ausreichend sicher gegen Manipulationsversuche sein müssen, werden die Zollverschlussvorrichtungen im Regelfall dauerhaft mit dem Transportfahrzeug verbunden, so dass diese nicht zerstörungsfrei vom Fahrzeug entfernt werden können. Die Herstellkosten für die Transportfahrzeuge mit dem bekannten Durchgriffschutz sind hoch, und bereits vorhandene Fahrzeuge könnten nachträglich nur mit ganz erheblichem Aufwand mit der bekannten Zollverschlussvorrichtung nachgerüstet werden. Ist die Zollverschlussvorrichtung beschädigt worden, sind Reparaturen nur mit hohem Aufwand durchführbar.

Ein Transportfahrzeug mit Zollverschlussvorrichtung der eingangs genannten Art ist aus der DE 102 26 067 A1 bekannt. Um eine temperaturbedingte Längendehnung und -schrumpfung der seitlichen Schiebeplane ausgleichen zu können, sind die Befestigungskrampen für die Zollverschlusssicherung in einer Schiebekulisse geführt. Die Schiebekulisse stellt eine formschlüssige Befestigung der Schiebekrampen in Abheberichtung dar, da die Führungsnuten durch ihre Form eine Abhebebewegung sperren. Da die Befestigungskrampen jedoch noch in seitlicher Richtung beweglich sind, können durch ein Verschieben der Befestigungskrampen Taschen in der Schiebeplane gebildet werden, die einen Durchgriff ermöglichen. Eine ausreichende Sicherungsfunktion gegen einen unerwünschten Eingriff in den Laderaum ist mit dieser Lösung nicht erzielbar.

Aus der DE 201 10 543 U1 ist ein Transportfahrzeug der eingangs genannten Art bekannt, bei dem ein Blockierkörper eine Querverschiebung der Leisten blockierend zwischen zwei Leisten und mit dem Transportfahrzeug verbunden sind. Das Blockierteil ist als Einsatzteil ausgebildet, das in eine nach oben offene C-förmige Außenrahmengestaltung eingelegt und dort entweder befestigt oder durch Formschluss gegen herausziehen nach unten gesichert ist. Dieses Einsatzteil ist auf der einem Außenrahmen zugewandten Seite mit einem nach dorthin offenen, nutenförmigen Hohlraum ausgestattet, der durch Anlegen und Befestigen des Einsatzteiles an dem Außenrahmen zu einer allseits umschlossenen, in Längsrichtung durchgängigen Durchgangsöffnung wird, durch welche das Zollseil hindurchgeführt werden kann. Diese Art der Blockierung der Leisten ist bauaufwändig.

Es ist Aufgabe der vorliegenden Erfindung, ein Transportfahrzeug mit einer Zollverschlusssicherung zu schaffen, durch das auf einfache und kostengünstige Art und Weise der Zollverschluss ausreichend sicher herstellbar ist.

Demgemäß ist es die Aufgabe der vorliegenden Erfindung, ein Transportfahrzeug mit einer Zollverschlussvorrichtung zu schaffen, durch das auf einfache und kostengünstige Art und Weise der Zollverschluss ausreichend sicher herstellbar ist.

Zur Lösung dieser Aufgabe zeichnet sich das Transportfahrzeug der eingangs genannten Art dadurch aus, dass seitliche Mittelrungen eine Querverschiebung der Leisten blockierend zwischen zwei Leisten gesetzt und mit dem Transportfahrzeug verbunden sind und wobei die Leisten nach Entfernen der seitlichen Mittelrungen oder des anderen Blockierkörpers entriegelbar sind.

Durch die erfindungsgemäßen Leisten wird die Ausrüstung eines Transportfahrzeuges mit einer Zollverschlussvorrichtung wesentlich vereinfacht und kostengünstiger. Die Transportfahrzeuge können weiterhin unter Verwendung vorhandener Standardbauteile hergestellt werden. Für die Ausrüstung der Transportfahrzeuge mit einer Zollverschlussvorrichtung ist es nur erforderlich, die betreffenden Transportfahrzeuge mit den erfindungsgemäß ausgestalteten Leisten zu versehen. Diese können standardisiert sein, wodurch die Herstellkosten sinken. Durch die Vormontage der Zollkrampen auf die Leisten wird die Montage am Fahrzeug beschleunigt. Es genügt, die Leisten seitlich am Rahmen und/oder Aufbau des Transportfahrzeugs zu befestigen. Um die Befestigung zu vereinfachen, sind die Leisten mit formschlüssigen Befestigungselementen wie beispielsweise ausgeklinkten Laschen versehen, die eine formschlüssige Verbindung der Leisten mit dem Rahmen und/oder den Aufbau des Transportfahrzeugs ermöglichen. Durch die Laschen wird die Montage beschleunigt und vereinfacht. Über die Leisten kann ein effektiver Durchgriffschutz hergestellt werden. Durch das eine Querverschiebung blockierende Zwischensetzen einer seitlichen Mittelrunge zwischen zwei Leisten werden diese gegen ungewünschte Demontagen und Manipulationen abgesichert. Durch die zwischengesetzten Mittelrungen ist es bei einem hergestelltem Zollverschluss nicht möglich, die erfindungsgemäßen Leisten vom Transportfahrzeug zu lösen. Dies ist im baulich sehr einfacher Weise zu realisieren.

Durch die Verwendung formschlüssiger Befestigungselemente wird ein unbefugtes Lösen der Leisten vom Transportfahrzeug erheblich erschwert, insbesondere, wenn durch das Befestigungselement eine zusätzliche Bewegungskomponente der Leisten wie eine Querverschiebung erforderlich wird, um die formschlüssige Verbindung aufheben zu können.

Nach einer Ausgestaltung der Erfindung sind die Leisten als Profilleisten ausgebildet, die im oberen Bereich einen Vorsprung aufweisen, der eine Anlagefläche für die Schiebeplane bildet und auf die die Schiebeplane in der Verschlussstellung anlegbar ist. Die Zollkrampen sind unterhalb des Vorsprungs auf den Leisten angeordnet. Der Vorsprung bildet einen Durchgriffschutz, durch den hindurch ein Unbefugter nicht in den Innenraum des Transportfahrzeuges hineingreifen kann. Soweit die Profilleisten als Vorsprünge ausgebildet sind, kann die Schiebeplane über diese Vorsprünge stramm gezogen werden. So ergibt sich eine gute Abdichtung des Innenraums des Transportfahrzeugs. Die Schiebeplane kann dann in den unterhalb der Vorsprünge angeordneten Zollkrampen festgelegt werden. Die vorgeschlagene Ausgestaltung ermöglicht auch eine leichte optische Kontrolle des ordnungsgemäßen Verschlusses für Zollpersonal und Nutzer des Transportfahrzeugs.

Nach einer Ausgestaltung der Erfindung sind die Zollkrampen nach innen versetzt auf den Leisten angeordnet. Durch den Versatz der Zollkrampen nach innen hin kann die Schiebeplane besser über den Vorsprung gespannt werden.

Nach einer Ausgestaltung der Erfindung sind die Leisten unterhalb der Ladefläche des Transportfahrzeugs angeordnet. Durch die Anordnung unterhalb der Ladefläche werden Be- und Entladearbeiten am Transportfahrzeug nicht behindert.

Nach einer Ausgestaltung der Erfindung sind die Leisten mit transportfahrzeugseitig vorhandenen Befestigungsvorrichtungen für Ladungssicherungssysteme verbunden. Wenn die Befestigungsvorrichtungen zur Befestigung der Leisten am Transportfahrzeug auf die transportfahrzeugseitig vorhandenen Ladungssicherungssysteme angepasst sind, ist die Montage der Leisten zusätzlich vereinfacht. Die Befestigungsmittel der Leisten können dann in die üblichen, häufig fahrzeugtypischen Befestigungsvorrichtungen - wie beispielsweise Langlöcher, Schlüssellochöffnungen, kreisförmige Löcher und dergleichen - eingesteckt und dort festgelegt werden.

Bei dieser Ausgestaltung der Leisten ist auch die Nachrüstung vorhandener Fahrzeuge deutlich vereinfacht. Dadurch, dass die Leisten mit Befestigungsvorrichtungen für am Fahrzeug vorhandene Ladungssicherungssysteme verbunden werden können, ist es auf einfache Art und Weise möglich, ein nicht mit einer Zollverschlussvorrichtung versehenes Fahrzeug durch die Montage der Leisten nachzurüsten, ohne dass dafür Arbeiten am Fahrzeug vorgenommen werden müssten, durch die die Tragfähigkeit und Sicherheit des Fahrzeuges beeinträchtigt werden könnte, wie beispielsweise Schweiß-, Bohr- oder Trennarbeiten an tragenden Fahrzeugteilen.

Nach einer Ausgestaltung der Erfindung weisen Leisten zumindest einen Überbrückungsbereich auf, mit dem am Rahmen und/oder Aufbau befestigte Zurrmittel überbrückt sind. Durch die Einbeziehung eines Überbrückungsbereiches in mehrere Leisten ist es möglich, die erfindungsgemäßen Leisten nicht durchgängig auf einer Seite des Transportfahrzeuges auf vorhandene fahrzeugseitige Befestigungsvorrichtungen aufzusetzen und diese damit abzudecken und für einen Gebrauch zu blockieren, sondern im Überbrückungsbereich verlaufen die Leisten in einem Abstand zum Rahmen und/oder Aufbau des Transportfahrzeuges, so dass im Zwischenraum noch Befestigungsvorrichtungen nutzbar sind, um daran mit dem Transportfahrzeug beförderte Ware gegen ungewolltes Verrutschen sichern zu können.

Nach einer Ausgestaltung der Erfindung sind mehrere Leisten lösbar mit dem Transportfahrzeug verbunden. Durch die lösbare Verbindung - beispielsweise mittels Schrauben oder dergleichen, die zerstörungsfrei lösbar sind - können die Leisten leicht an das Transportfahrzeug angebaut, aber auch wieder abgebaut oder für Reparaturzwecke ausgetauscht werden. Die Nachrüstung und Umrüstung wird dadurch erheblich vereinfacht. Die Leisten können mit vorbereiteten Bohrlöchern versehen sein, durch die dann nur noch eine Schraube eingesteckt und mit dem Transportfahrzeug verbunden werden muss.

Es wird ausdrücklich darauf hingewiesen, dass die vorstehend beschriebenen vorteilhaften Ausgestaltungen der Erfindung jeweils für sich oder auch zu mehreren oder insgesamt mit dem Gegenstand des Hauptanspruchs in beliebiger Weise kombinierbar sind, soweit dem keine unüberwindbaren konstruktiven Hindernisse oder funktionalen Abhängigkeiten entgegen stehen. Die vorstehenden Erläuterungen der Vorteile der jeweiligen Ausgestaltungen gelten entsprechend für die einzelnen Leisten, die zur Nachrüstung vorhandener Transportfahrzeuge auch einzeln handelbar sein können.

Weitere Abwandlungen und vorteilhaften Ausgestaltungen der Erfindung ergeben sich aus der nachfolgenden gegenständlichen Beschreibung und den Zeichnungen.

Die Erfindung wird nun anhand eines Ausführungsbeispiels näher erläutert. Es zeigen:
Fig. 1: ein Transportfahrzeug in einer Seitenansicht,
Fig. 2: eine Ansicht auf eine Leiste,
Fig. 3: eine Ansicht auf die Rückseite einer Leiste,
Fig. 4: eine Ansicht auf eine Leiste mit einem Überbrückungsbereich,
Fig. 5: eine Ansicht auf den in Fig. 4 dargestellten Überbrückungsbereich mit eingeklapptem Verzurrhaken,
Fig. 6: eine Querschnittsansicht durch den mit einer Leiste versehenen Rahmen,
Fig. 7: eine Ansicht auf ein Transportfahrzeug mit montierter Mittelrunge, und
Fig. 8: eine Ansicht auf den Heckbereich eines Transportfahrzeugs.

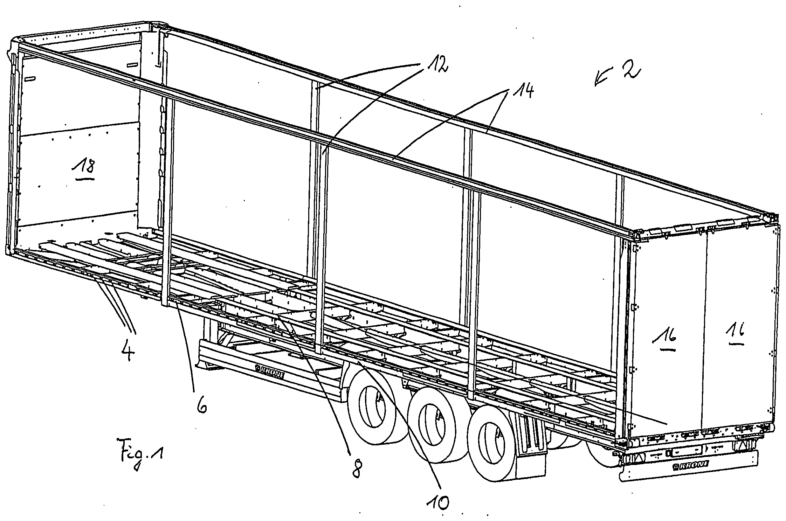

In Fig. 1 ist ein Transportfahrzeug 2 gezeigt, das über einen großen Innenraum für den Transport von Waren verfügt. Um die Ware zollsicher verschließen zu können, sind auf der Seite des Transportfahrzeugs 2 Leisten 6 mit Zollkrampen 4 aufgesetzt. Das Transportfahrzeug 2 verfügt über einen Rahmen 8. Die Seitenträger 10, an dem die Leisten 6 befestigt sind, bilden einen Bestandteil des Rahmens 8. Anstelle der Seitenteile 10 können auch andere Bauteile des Transportfahrzeugs 2 zur Anbringung der Leisten 6 dienen. Auf die Seitenträger 10 sind seitliche Mittelrungen 12 aufgesetzt. Die in Fig. 1 nicht gezeigte Schiebeplane wird an ihrer Oberseite am Außenbaum 14 befestigt und von diesem geführt. Nach hinten ist der Laderaum durch eine Hecktür 16, nach vorne durch eine fest Stirnwand 18 begrenzt. Die Oberseite des Laderaums kann durch eine Dachplane oder eine feste Wand verschlossen sein.

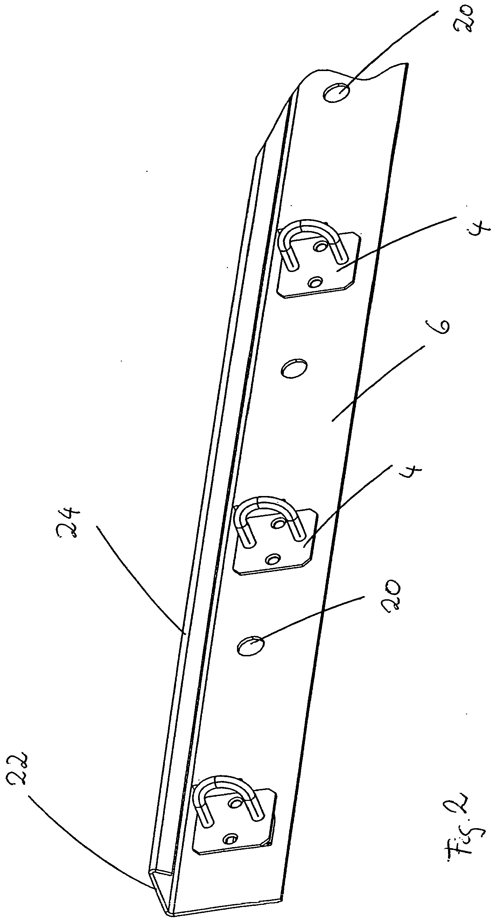

In Fig. 2 ist eine Leiste 6 in einer vergrößerten Ansicht gezeigt. Im Ausführungsbeispiel besteht die Leiste 6 aus einem Profilblech, auf das beabstandet zueinander eine Anzahl von Zollkrampen 4 aufgesetzt sind. Die Leiste 6 weist außerdem eine Anzahl von Bohrungen 20 auf, über die die Leiste 6 mit dem Transportfahrzeug 2 verschraubbar ist. Im oberen Bereich verfügt die Leiste 6 über einen Vorsprung 22, der über die übrige Fläche der Leiste 6 hervorragt. Die Vorderkante des Vorsprungs 22 bildet eine Anlagefläche 24, über die die Schiebeplane gespannt werden kann. Im Ausführungsbeispiel sind die Zollkrampen 4 unterhalb des Vorsprungs 22 angeordnet. Im Ausführungsbeispiel sind die Zollkrampen außerdem um ein gewisses Maß nach innen hin versetzt. Dadurch wird die Schiebeplane in ihrer Verschlussstellung über die Zollkrampen nicht nur nach unten, sondern zusätzlich noch in einem Winkel nach innen auf das Fahrzeug zu gezogen, wodurch sich eine bessere und dichtere Anlage der Schiebeplane auf der Anlagefläche 22 ergibt.

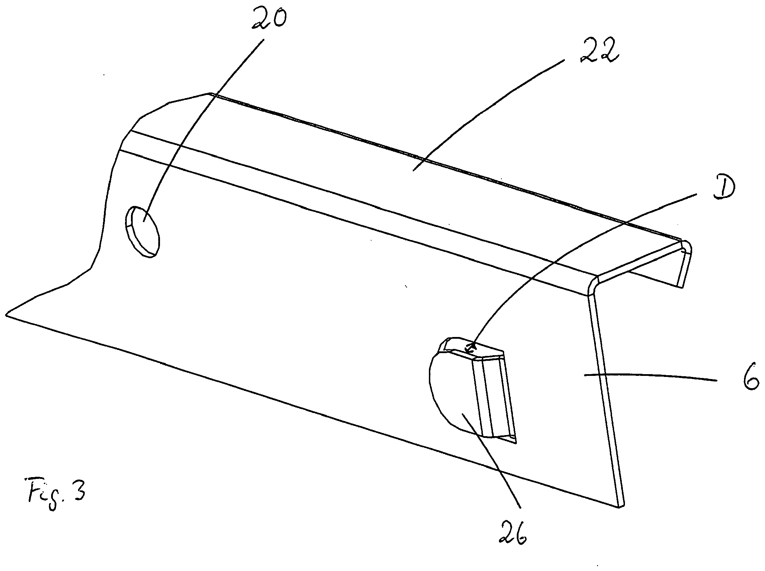

In Fig. 3 ist eine Leiste 6 mit einer Ansicht auf ihre Rückseite gezeigt. In dieser Ansicht ist gut die Lasche 26 erkennbar, die aus der Fläche der umgebenden Leiste 6 ausgeklinkt ist. Die Lasche als Beispiel für ein formschlüssiges Befestigungselement steht um ein Abstand D über die nach innen weisende Oberfläche der Leiste 6 hervor. Der Abstand D sollte so groß bemessen sein, dass die Leiste D mit der Lasche 26 auf einen Seitenträger 10 aufgelegt und danach so in eine Querrichtung verschoben werden kann, dass die Lasche 26 einen Wandungsabschnitt des Seitenträgers 10 bevorzugt leicht klemmend hintergreift. Durch das Aufsetzen und Querverschieben einer Leiste 6 auf einem Seitenträger 10 kann die Seitenleiste 6 so mit dem Seitenträger 10 verbunden werden, dass diese nach einem späteren Lösen von Schrauben, die durch die Bohrung 20 hindurch gesteckt sind, nicht einfach nach vorn aus der Montageposition herausgenommen werden kann. Durch die mittels der Laschen 26 gegen ein einfaches Abheben der Leiste 6 erfolgte Sicherung wird ein solches Erschwernis für die Demontage geschaffen, dass die Leiste 6 aus Zollsicht als ausreichend sicher gegen unerwünschte Manipulationen angesehen wird.

Im Ausführungsbeispiel ist für eine formschlüssige Verbindung die Lasche 26 gezeigt, für den Fachmann versteht es sich von selbst, dass an Stelle einer Lasche 26 auch andere für sich bekannte formschlüssige Verbindungen möglich sind.

Im Ausführungsbeispiel ist gezeigt, dass die Leisten 6 am Rahmen 8 bzw. dem damit verbundenen Seitenträger 10 befestigt sind. Alternativ ist es natürlich auch möglich, die Leiste 6 an einem Bauteil des Aufbaus zu befestigen, wenn hierdurch eine ausreichende Durchgriffsicherheit erzielt wird.

In dem in Fig. 3 gezeigten Abschnitt einer Leiste 6 ist nur eine einzige Lasche 26 zu sehen, natürlich können an einer Leiste 6 auch mehr als eine Lasche 26 vorgesehen sein.

Eine besonders leichte Montierbarkeit für die Leiste 6 ergibt sich, wenn die Laschen 26 als formschlüssige Verbindungselemente von ihrer Form und ihren Abmessungen her so gestaltet sind, dass sie in vorhandene Öffnungen im Rahmen 8 oder dem Seitenträger 10 eingreifen können, die für Ladungssicherungssysteme am Transportfahrzeug 2 vorhanden sind.

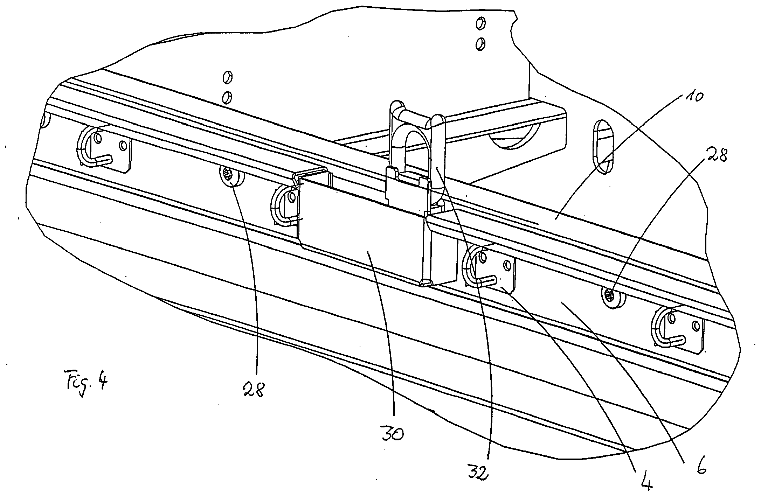

In Fig. 4 ist eine Leiste 6 mit daran befestigten Zollkrampen 4 gezeigt, die über Schrauben 28 mit dem Seitenträger 10 verbunden ist. In Fig. 4 ist ein Überbrückungsbereich 30 gezeigt, in dem die Leiste 6 nicht auf dem darunter liegenden Seitenträger 10 direkt aufliegt, sondern einen Abstand dazu einhält. Dadurch ergibt sich zwischen der Leiste 6 und dem Seitenträger 10 ein freier Bauraum, der in der in Fig. 4 gezeigten Darstellung teilweise von einem Zurrmittel 32 eingenommen ist. In der Abbildung in Fig. 4 ist das Zurrmittel 32 nach oben hin aufgeschwenkt, damit dort Spanngurte oder ähnliche Ladungssicherungshilfsmittel befestigt werden können.

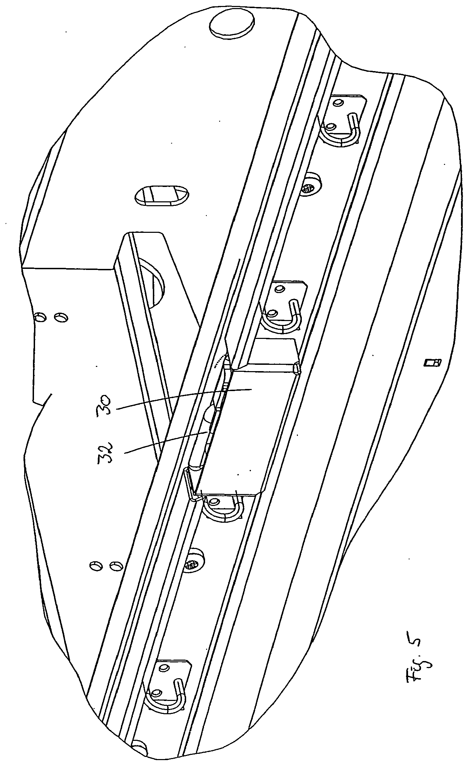

In Fig. 5 ist gezeigt, dass das Zurrmittel 32 nun vollständig in den Übergangsbereich 30 eingeklappt ist. Der Überbrückungsbereich 30 ist ausreichend groß gewählt, um das Zurrmittel 32 vollständig aufnehmen zu können. Durch die Versenkbarkeit des Zurrmittels 32 im Überbrückungsbereich 30 wird vermieden, dass die Zurrmittel 32 bis in oder gar über die Höhe der Ladefläche des Transportfahrzeugs 2 aufragen können. Um Beschädigungen während Be- und Entladearbeiten zu vermeiden, ist es vorteilhaft, wenn ein Zurrmittel 32 in einen Bereich unterhalb der Ladeebene des Transportfahrzeugs 2 verschwenkt werden kann, wie dies in Fig. 5 gezeigt ist.

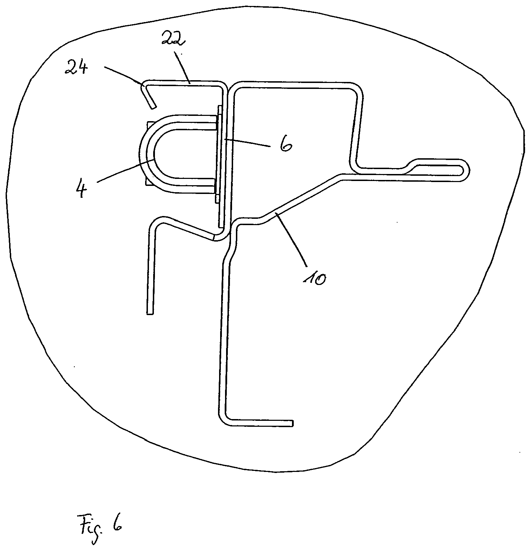

In Fig. 6 ist eine Querschnittsansicht durch einen Seitenträger 10 mit einer daran befestigten Leiste 6 gezeigt. Mit der Leiste 6 ist eine Zollkrampe 4 verbunden. In der Querschnittsansicht ist außerdem gut der Vorsprung 22 mit der Anlagefläche 24 zu erkennen. Auch ist in dieser Ansicht gut der Versatz der Zollkrampe 4 im Verhältnis zum Vorsprung 22 mit der Anlagefläche 24 erkennbar.

Die Zollkrampe 4 ist so gestaltet, dass durch den von ihr umgrenzten Freiraum ein Zollverschlussseil durchgezogen werden kann. Das durch die Zollkrampen 4 hindurchgezogene Zollverschlussseil legt dann die zuvor auf die Leiste 6 aufgelegte Schiebeplane fest, so dass es nicht mehr möglich ist, von unten zwischen dem Vorsprung 22 und der darauf aufliegenden Schiebeplane in den Innenraum des Transportfahrzeugs 2 hineinzugreifen, ohne dabei nicht die Schiebeplane oder der Befestigung der Schiebeplane dienende Teile beschädigen und zerstören zu müssen.

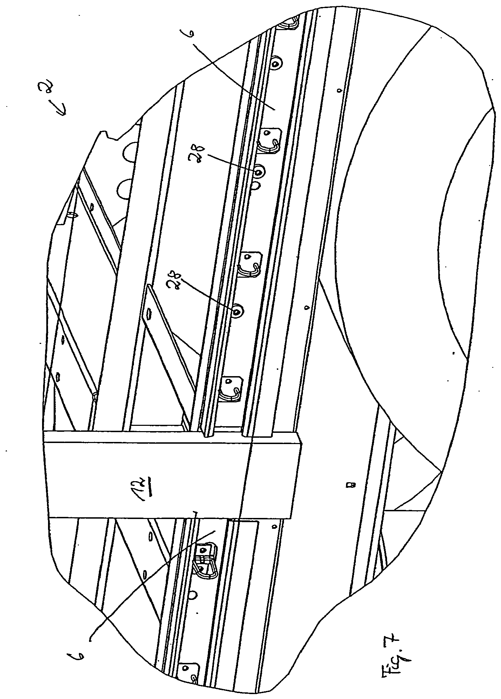

In Fig. 7 ist eine Ansicht auf das Transportfahrzeug 2 im Bereich einer Mittelrunge 12 gezeigt. Auf der Vorder- und Rückseite stoßen an die Mittelrunge 12 jeweils Leisten 6 mit ihren Stirnseiten an. Die Mittelrunge 12 bildet in ihrer Einbaustellung eine Sperre gegen ein seitliches Verschieben der Leisten 6. Da die Leisten 6 jeweils durch die Laschen 26 gegen ein Abheben nach vorne hin gesichert sind, macht die Montage der Mittelrunge 12 in unmittelbarer Nachbarschaft zur Leiste 6 eine Querverschiebebewegung der Leiste 6 unmöglich, ohne zuvor die Mittelrunge 12 abnehmen oder diese zerstören zu müssen. Da die Mittelrunge bei geschlossener Schiebeplane von außen nicht zugänglich beziehungsweise zu öffnen ist, erhöht die Blockade der Leisten 6 gegen ein seitliches Verschieben die Verschlusssicherheit, die durch die Verwendung der Leisten 6 herbeigeführt wird. Selbst wenn es einer unbefugten Person gelingen würde, die Schrauben 28 zu entfernen, wäre es noch immer nicht möglich, die Leisten 6 abzuheben und durch den dadurch frei werdenden Spalt in den Innenraum des Transportfahrzeuges zu greifen. Alternativ zur dargestellten Befestigung einer Mittelrunge 12 in einer eine Querverschiebung blockierenden Montageposition ist es auch möglich, die Mittelrunge 12 von außen unmittelbar auf eine darunter befindliche Leiste aufzusetzen und die Mittelrunge 12 sodann dauerhaft mit dem Rahmen zu verbinden. Auch auf diese Weise kann eine verbesserte Fixierung der Leiste 6 gegen ein unberechtigtes Entfernen erzielt werden.

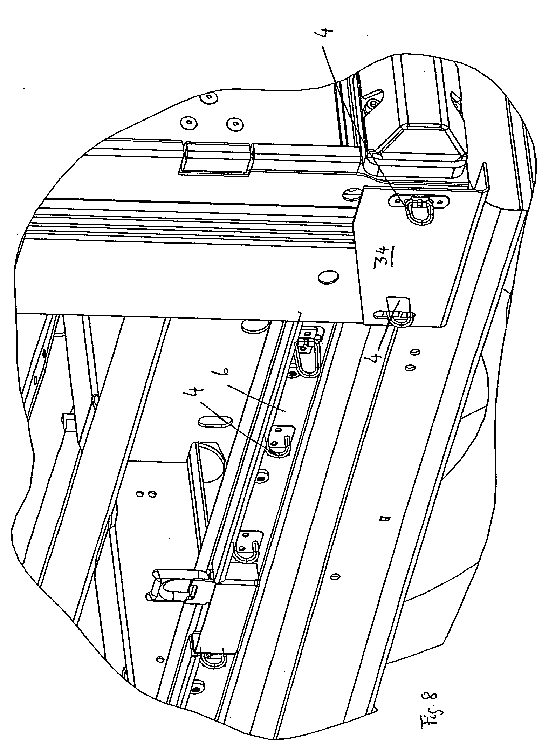

In Fig. 8 ist der Heckbereich eines Transportfahrzeuges 2 gezeigt. Da in diesem Bereich die Eckrungen zur Halterung der Hecktüren 16 angeordnet sind, ist häufig nicht möglich, die Leisten 6 bis an das Heck des Fahrzeugs durchgehen zu lassen. Um auch in diesem Bereich eine zolldichte Befestigung der Schiebeplane zu erzielen, ist im Ausführungsbeispiel eine Befestigungsplatte 32 auf die Eckrungen aufgesetzt, die ebenfalls eine oder mehrere Zollkrampen 4 aufweist. Auf diese Weise ist es möglich, eine Schiebeplane auch im Heckbereich eines Fahrzeugs 2 zolldicht zu verschließen.

Die vorstehende gegenständliche Beschreibung dient nur der beispielhaften Erläuterung der Erfindung, sie ist keineswegs auf das Ausführungsbeispiel beschränkt. Dem Fachmann bereitet es keine Schwierigkeiten, die Erfindung abzuwandeln und so auf eine ihm als geeignet erscheinende Weise an einen konkreten Anwendungsfall anzupassen, ohne dadurch die Lehre der Erfindung zu verlassen

## Patentansprüche

1. Transportfahrzeug (2) mit Zollverschlussvorrichtung für Schiebeplanen, wobei die Zollverschlussvorrichtung Zollkrampen (4) zur Festlegung der Schiebeplanen mittels eines Zollverschlussseils aufweist, wobei die Zollverschlussvorrichtung aus mehreren Leisten (6) besteht, auf die in Abständen zueinander jeweils die Zollkrampen (4) aufgesetzt sind, die Leisten (6) seitlich am Rahmen oder Aufbau des Transportfahrzeugs (2) befestigt sind, und die Leisten (6) formschlüssige Befestigungselemente aufweisen, die eine formschlüssige Verbindung der Leisten (6) mit dem Rahmen (8) und/oder dem Aufbau des Transportfahrzeugs (2) ermöglichen, **dadurch gekennzeichnet, dass** seitliche Mittelrungen (12) eine Querverschiebung der Leisten (6) blockierend zwischen zwei Leisten (6) gesetzt und mit dem Transportfahrzeug verbunden sind.

2. Transportfahrzeug (2) nach Anspruch 1, **dadurch gekennzeichnet, dass** die Leisten (6) als Profilleiste ausgebildet sind, die im oberen Bereich einen Vorsprung aufweisen, der eine Anlagefläche (24) für die Schiebeplane bildet und auf den die Schiebeplane in der Verschlussstellung anlegbar ist, und die Zollkrampen (4) unterhalb des Vorsprungs auf den Leisten (6) angeordnet sind.

3. Transportfahrzeug (2) nach Anspruch 2, **dadurch gekennzeichnet, dass** die Zollkrampen (4) nach innen versetzt auf den Leisten (6) angeordnet sind.

4. Transportfahrzeug (2) nach einem der vorher gehenden Ansprüche, **dadurch gekennzeichnet, dass** die Leisten (6) unterhalb der Ladefläche des Transportfahrzeugs (2) angeordnet sind.

5. Transportfahrzeug (2) nach einem der vorher gehenden Ansprüche, **dadurch gekennzeichnet, dass** die Leisten (6) mit transportfahrzeugseitig vorhandenen Befestigungsvorrichtungen für Ladungssicherungssysteme verbunden sind.

6. Transportfahrzeug (2) nach einem der vorher gehenden Ansprüche, **dadurch gekennzeichnet, dass** mehrere Leisten (6) zumindest einen Überbrückungsbereich (30) aufweisen, mit dem am Rahmen (8) und/oder Aufbau befestigte Zurrmittel (32) überbrückt sind.

7. Transportfahrzeug (2) nach einem der vorher gehenden Ansprüche, **dadurch gekennzeichnet, dass** die Leisten (6) lösbar mit dem Transportfahrzeug (2) verbunden sind.

8. Transportfahrzeug nach einem der Ansprüche 1 bis 7, **dadurch gekennzeichnet, dass** die Leisten (6) einen oder mehrere Überbrückungsbereiche (30) aufweisen, mit denen am Rahmen (8) oder Aufbau befestigte Zurrmittel überbrückbar sind.

## Claims

1. Transport vehicle (2) having an customs seal apparatus for sliding tarpaulins, the customs seal apparatus comprising customs staples (4) for fixing the sliding tarpaulins by means of an customs seal rope, the customs seal apparatus consisting of a plurality of strips (6) on which the customs staples (4) are placed so as to be mutually spaced in each case, the strips (6) being fastened to the sides of the frame or of the body of the transport vehicle (2), and the strips (6) comprising positive fastening elements that permit a positive connection of the strips (6) to the frame (8) and/or the body of the transport vehicle (2), **characterised in that** central stakes (12) at the sides of the vehicle are placed between two strips (6) so as to block a transverse displacement of the strips (6) and are connected to the transport vehicle.

2. Transport vehicle (2) according to claim 1, **characterised in that** the strips (6) are formed as profile strips that comprise a projection in the upper region thereof, which projection forms a contact surface (24) for the sliding tarpaulin and on which projection the sliding tarpaulin can be positioned when sealed, and the customs staples (4) are arranged on the strips (6), underneath the projection.

3. Transport vehicle (2) according to claim 2, **characterised in that** the customs staples (4) are arranged on the strips (6) so as to be offset towards the inside.

4. Transport vehicle (2) according to any of the preceding claims, **characterised in that** the strips (6) are arranged underneath the load bed of the transport vehicle (2).

5. Transport vehicle (2) according to any of the preceding claims, **characterised in that** the strips (6) are connected to fastening devices for load securing systems, which devices are provided on the transport vehicle side.

6. Transport vehicle (2) according to any of the preceding claims, **characterised in that** a plurality of strips (6) comprise at least one bridging region (30), by means of which lashing means (32) that are fastened to the frame (8) and/or the body are bridged.

7. Transport vehicle (2) according to any of the preceding claims, **characterised in that** the strips (6) are detachably connected to the transport vehicle (2).

8. Transport vehicle according to any of claims 1 to 7, **characterised in that** the strips (6) comprise one or more bridging regions (30), by means of which lashing means that are fastened to the frame (8) or the body can be bridged.

## Revendications

1. Véhicule de transport (2) comprenant un dispositif de scellement douanier pour bâches coulissantes, le dispositif de scellement douanier comprenant des pattes de scellement douanier (4) destinées à la fixation des bâches coulissantes au moyen d'un câble de scellement douanier, le dispositif de scellement douanier étant constitué de plusieurs barres (6) sur lesquelles les pattes de scellement douanier (4) sont placées à distance les unes des autres, les barres (6) étant fixées latéralement au châssis ou à la structure du véhicule de transport (2), et les barres (6) comportant des éléments de fixation à complémentarité de formes, qui permette de relier par complémentarité de formes les barres (6) au châssis (8) et/ou à la structure du véhicule de transport (2), **caractérisé en ce que** des montants médians latéraux (12) sont placés entre deux barres (6) de manière à bloquer le coulissement latéral des barres (6) et sont reliés au véhicule de transport.

2. Véhicule de transport selon la revendication 1, **caractérisé en ce que** les barres (6) sont conçues sous la forme de barres profilées qui comporte dans la région supérieure une saillie qui forme une surface d'appui (24) destinée à la bâche coulissante et sur laquelle la bâche coulissante peut venir en appui en position fermée (4) et **en ce que** les pattes de scellement douanier sont disposées sur les barres (6) au-dessous de la saillie.

3. Véhicule de transport (2) selon la revendication 2, **caractérisé en ce que** les pattes de scellement douanier (4) sont disposées sur les barres (6) en étant décalées vers l'intérieur.

4. Véhicule de transport (2) selon la revendication 1, dans lequel les barres (6) sont disposées au-dessous de la surface de chargement du véhicule de transport (2).

5. Véhicule de transport (2) selon l'une des revendications précédentes, **caractérisé en ce que** les barres (6) sont reliées à des dispositifs de fixation présents sur le côté du véhicule de transport et destinés à des systèmes de sécurisation de charge.

6. Véhicule de transport (2) selon l'une des revendications précédentes, **caractérisé en ce que** plusieurs barre (6) comportent au moins une zone de pontage avec laquelle des moyens d'arrimage (32), fixés au châssis et/ou à la structure, sont pontés.

7. Véhicule de transport (2) selon l'une des revendications précédentes, **caractérisé en ce que** les barres (6) sont reliées de manière amovible au véhicule de transport (2).

8. Véhicule de transport selon l'une des revendications 1 à 7, **caractérisé en ce que** les barres (6) comportent une ou plusieurs zones de pontage (30) avec lesquelles des moyens d'arrimage, fixés au châssis (8) ou à la structure, peuvent être pontés.
